# NEW EUROPEAN PATENT SPECIFICATION

(11) **EP 0 501 187 B2**
(45) Date of publication and mention of the opposition decision: **12.05.2010**
(45) Mention of the grant of the patent: 17.04.1996
(21) Application number: 92101823.0
(22) Date of filing: 04.02.1992
(51) Int. Cl.: H01M 4/52

(54) **Nonaqueous electrolyte secondary battery**
Sekundärbatterie mit nichtwässrigem Elektrolyten
Pile secondaire à électrolyte non-aqueux

(30) Priority: 05.02.1991 JP 3550491
(43) Date of publication of application: 02.09.1992
(73) Proprietor: Sony Corporation, Tokyo 141 (JP)
(72) Inventor: Yamamoto, Yoshikatsu, Sony Energytec Inc., Hiwada-cho, Koriyama, Fukushima-ken (JP)
(74) Representative: Müller, Frithjof E.

(56) References cited:
- EP-A- 0 462 575
- EP-A- 0 468 942
- EP-A2- 0 391 281
- JP-A- 63 121 260
- US-A- 4 804 596
- 'Journal of Materials Science Letters' vol. 5, 1986, pages 552 - 554
- 'J. Electrochem.Soc.' vol. 134, no. 3, March 1987, pages 638 - 641
- 'Mat.Res.Bull.' vol. 15, 1980, pages 783 - 789

## Description

### BACKGROUND OF THE INVENTION

The present invention relates to a method for assembling a nonaqueous electrolyte secondary battery having as the positive electrode active material a lithium compound oxide, i.e. a compound oxide of lithium and cobalt. The present invention is intended to improve the cycle characteristics of the nonaqueous electrolyte secondary battery.

Recent years have seen active research and development in the field of secondary batteries having a high energy density as a portable power source for miniaturized electronic machines and equipment. Japanese Patent Publication No. 59507/1988 discloses a nonaqueous electrolyte secondary battery having as the positive electrode active material a lithium compound oxide such as a compound oxide of lithium and a transition metal. This secondary battery has an advantage not only in high energy density but also in high charge-discharge voltage, less self-discharge, and light weight.

In order for a secondary battery to retain its out-standing performance over a long period of time as a power source for electronic machines and equipment, it is necessary to minimize the capacity decrease which occurs as the charge-discharge cycles are repeated. As far as the capacity decrease is concerned, no satisfactory results have been obtained with the conventional nonaqueous electrolyte secondary battery having a lithium compound oxide as the positive electrode active material.

It is conceivable that the capacity decrease is caused by the reaction between the positive electrode active material and the electrolyte. This reaction is an oxidation-reduction reaction, which involves the movement of electrons and ions across the surface of the lithium compound oxide as the positive electrode active material.

The fact that the charge-discharge voltage is as high as about 4 V in the case of a nonaqueous electrolyte secondary battery having a lithium compound oxide as the positive electrode active material makes the electrolyte more liable to oxidation. The more the electrolyte is oxidized by the lithium compound oxide, the more the reaction area is decreased. The degree of decrease is proportional to the initial value of the reaction area.

Therefore, the area for reaction between the positive electrode active material and the electrolyte should be larger than a certain value so that the secondary battery has a large initial capacity; at the same time, however, it should be smaller than a certain value so that the capacity does not decrease as the battery reaction proceeds.

The reaction area may be expressed in terms of the average particle diameter and particle size distribution of the lithium compound oxide. However, these parameters are not satisfactory because they do not take into account the surface irregularities of particles and the agglomeration of particles. It is believed. therefore, that it is more appropriate to use the specific surface area of the lithium compound oxide as the parameter to express the reaction area more accurately.

EP-A-0 468 942 which forms part of the state of the art in the sense of Art. 54(3) EPC discloses a non-aqueous electrolyte secondary battery comprising a lithium compound oxide material LiₓNi_{2-x-y}M_{y}O₂ as active material,wherein x is between 0.8 and 1.0, M is one or more metals selected from the group consisting of cobalt, iron, titanium, manganese, chromium and vanadium, and y is less than about 0.2, with the proviso that y is less than about 0.5 for cobalt. Example II discloses non-aqueous secondary electrochemical cells comprising lithiated nickel dioxide (Li_{1-y}NiO₂) cathode active material, a non-aqueous electrolyte and a carbonaceous counter-electrode which is doped/undoped with Li. The BET surface area of the active material may be less than about 3.0 m²/g.

### OBJECT OF THE INVENTION

It is an object of the present invention to provide a method for assembling a non-aqueos electrolyte secondary battery having a lithium compound oxide as the positive electrode active material, said secondary battery being improved in retention of the capacity which would otherwise decrease as the charge-discharge cycles are repeated.

### BRIEF DESCRIPTION OF THE DRAWINGS:

Fig. 1 is a longitudinal sectional view of the nonaqueous electrolyte secondary battery in cylindrical form prepared in the example of the present invention;
Fig. 2 is a graph showing how the retention of capacity is effected by the specific surface area of the lithium compound oxide powder (LiCoO₂) used as the positive electrode active material in the battery shown in Fig. 1;
Fig. 3 is a graph showing how the initial capacity is affected by the specific surface area of the lithium compound oxide powder (LiCoO₂) used as the positive electrode active material in the battery shown in Fig. 1.

### DESCRIPTION OF THE PREFERRED EMBODIMENTS

The present invention is embodied in a method for assembling a non-aqueous electrolyte secondary battery comprising:
- a positive electrode containing lithium compound oxide powder LiₓCoO₂ (where x is between 0.05 and 1.10) as positive electrode active material,
- a non-aqueous electrolyte and
- a negative electrode containing carbonaceous material being doped and undoped with lithium upon charge and discharge,
wherein a lithium compound oxide powder is provided and the specific surface area of the lithium compound oxide powder is measured by the BET-method and a lithium compound oxide powder is used that has a BET specific surface area of 0.01 to 0.1 m²/g and the non-aqueous electrolyte secondary battery is assembled using said lithium compound oxide powder as positive electrode material.

The above-mentioned lithium compound oxide is a compound oxide of lithium and cobalt represented by the formula LiₓCoO₂ (where x is defined by 0.05 ≤ x ≤ 1.10). It includes, for example, LiCoO₂. They can be obtained from lithium carbonate and cobalt carbonate by calcining their mixture at 600-1100°C in an atmosphere containing oxygen. The starting materials are not limited to the above-mentioned two carbonates; but it is possible to use hydroxides or oxides of lithium and cobalt as the starting materials.

The nonaqueous electrolyte secondary battery used in the method of the present invention may have as the negative electrode carbonaceous material that permits intercalation and deintercalation of lithium ions. Examples of the carbonaceous material include coke, polymer carbon, carbon fiber, polyacetylene, and polypyrrole.

The nonaqueous electrolyte secondary battery used in the method of the present invention may have as the electrolyte a nonaqueous electrolyte formed by dissolving a lithium salt in a nonaqueous solvent (organic solvent).

The organic solvent is not specifically limited. It includes, for example, propylene carbonate, ethylene carbonate, 1,2-dimethoxyethane, 1,2-diethoxyethane, γ-butyrolactone, tetrahydrofuran, 1,3-dioxolane, 4-methyl-1,3-dioxolane, diethyl ether, sulfolane, methylsulfolane, acetonitrile, and propylnitrile. They may be used alone or in combination with one another.

The electrolyte solute to be dissolved in the organic solvent includes LiClO₄, LiAsF₆, LiPF₆, LiBF₄, LiB(C₆H₅)₄, LiCl, LiBr, CH₃SO₃Li, and CF₃SO₃Li, which are known well.

The nonaqueous electrolyte secondary battery used in the method of the present invention has as the positive electrode active material the above mentioned lithium compound oxide in powder form which has a BET specific surface area of 0.01-0.1 m²/g, so that an adequate reaction area is established between the positive electrode active material and the electrolyte and the oxidation of the electrolyte does not take place more than necessary on the positive electrode. Therefore, the secondary battery has a large initial capacity and yet retains its capacity even after repeated charge-discharge cycles.

### [Examples]

The invention will be described with reference to the accompanying drawings.

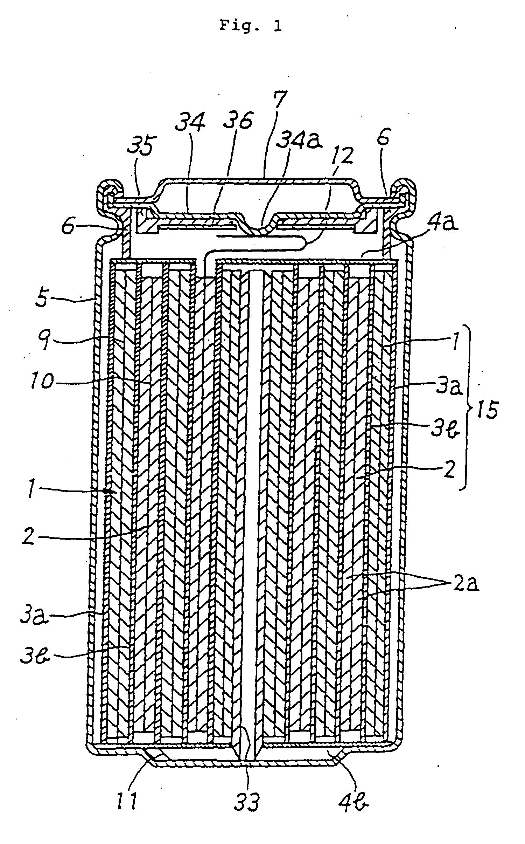

Fig. 1 is a schematic longitudinal sectional view of the nonaqueous electrolyte secondary battery pertaining to the example. The manufacturing process is explained below.

First, the positive electrode 2 was produced as follows. A mixture of lithium carbonate (0.5 mol) and cobalt carbonate (1 mol) was calcined in air at 900°C for 5 hours to give bulk LiCoO₂. This bulk LiCoO₂ was crushed by ball-milling, followed by classification, to give LiCoO₂ powder having a specific surface area of 0.01 m²/g. The specific surface area was measured by the BET one point method using a Cantasorb made by Cantacrom Co., Ltd.

The LiCoO₂ powder having a specific surface area of 0.01 m²/g was used as the positive electrode active material. To make a positive electrode mix, 91 parts by weight of LiCoO₂ was mixed with 6 parts by weight of graphite as the conductor and 3 parts by weight of polyvinylidene fluoride (PVDF) as the binder. The positive electrode mix was dispersed in N-methyl-2-pyrrolidone (solvent) to make a slurry (or paste). The positive electrode mix in the form of slurry was uniformly applied to both sides of the positive electrode current collector 10 (which is an aluminum foil strip). After drying, the coated current collector was passed through a roller press for compression molding. Thus there was obtained the positive electrode 2 having the positive electrode mix layers 2a on both sides thereof. The LiCoO₂ is present in the positive electrode mix layer 2a in the form of powder bound to the current collector with the binder.

Secondly, the negative electrode 1 was produced as follows: Pitch coke (carbonaceous material) was crushed into powder which was used as the carrier for the negative electrode active material. To make a negative electrode mix, 90 parts by weight of the pitch coke powder was mixed with 10 parts by weight of polyvinylidene fluoride (PVDF) as the binder. The negative electrode mix was dissolved in N-methyl-2-pyrrolidone (solvent) to make a slurry (paste). The negative electrode mix in the form of slurry was uniformly applied to both sides of the negative electrode current collector 9 (which is a copper foil strip). After drying, the coated current collector was passed through a roller press for compression molding. Thus there was obtained the negative electrode 1.

The negative electrode 1 and positive electrode 2 prepared as mentioned above were placed on top of the other, with the latter sandwiched between a pair of separators 3a and 3b made of 25-µm thick porous polypropylene film. The resulting four-layered laminate was spirally wound in the lengthwise direction, with the negative electrode 1 inside. Thus there was obtained the spiral electrode 15, with a core 33.

The spiral electrode 15 was placed in the nickel-plated iron can 5, as shown in Fig. 1.

For current collection, the negative electrode current collector 9 was provided with a nickel lead 11, which was subsequently welded to the bottom of the battery can 5, and the positive electrode current collector 10 was provided with an aluminum lead 12, which was subsequently welded to the projecting part 34a of the metal safety valve 34.

The battery can 5 was filled with a nonaqueous electrolyte for impregnation of the spiral electrode 15 with electrolyte. The nonaqueous electrolyte is a solution (1 mol/liter) of LiPF₆ in propylene carbonate and 1,2-dimethoxyethane mixed in equal quantities.

Incidentally, the above-mentioned step was preceded by placing an insulation disc 4b on the bottom of the battery can 5 and followed by placing an insulation disc 4a on the upper end of the spiral electrode assembly 15.

Finally, the battery can 5 was closed with the safety valve 34 and the metal lid 7 (with their peripheries in close contact with each other) by crimping, with the asphalt-coated insulating gasket 6 interposed between them. The gasket 6 secures the safety valve 3 and the battery lid 7 and keeps the battery can air-tight. The lower end of the gasket 6 is in contact with the periphery of the insulating disc 4a, so that the insulating disk 4a is kept in close contact with the upper end of the spiral electrode assembly 15.

The above-mentioned procedure yielded a nonaqueous electrolyte secondary battery in cylindrical form measuring 13.8 mm in diameter and 50 mm in height. This battery is designated as battery A.

To ensure safety, the safety vale 34 is provided with a stripper 36 bonded by an insulating intermediate member 35. Although not shown, the safety valve 34 has a cut which opens when the safety valve 34 is deformed and the battery lid 7 has a hole.

When the internal pressure of the battery increases for some reason or other, the safety valve 34 will deform upward, so that the projecting part 34a of the safety valve 34 is disconnected from the positive electrode lead 12 and hence the battery current is cut off. Alternatively, the safety valve 34 will break at its cut so as to discharge the gas that has been evolved in the battery.

The same procedure as mentioned above was repeated to prepare nonaqueous electrolyte secondary batteries in cylindrical form, except that the LiCoO₂powder varies in specific surface area. The LiCoO₂ powder was prepared under different crushing and classifying conditions so that it has a specific surface area of 0.1, 0.5, 1.0, 2.0, and 3.0 m²/g. The resulting batteries are designated as batteries B, C, D, E, and F. C, D, E and F are comparative examples.

In further comparative examples, the same procedure mentioned above was repeated, except that the LiCoO₂ powder was prepared by ball-milling under different conditions so that it has a specific surface area of 5.0 or 0.005 m²/g. The resulting batteries are designated as batteries G and H.

Each of the above-mentioned eight batteries A to H was charged and discharged repeatedly. Charging was carried out for 2 hours at a maximum voltage of 4.1 V and a constant current of 500 mA. Discharging was carried out at a constant load of 18 Ω until an end voltage of 2.75 V was reached. After 10 charge-discharge cycles, the battery capacity was measured (initial capacity). After 200 charge-discharge cycles, the battery capacity was measured (capacity after 200 cycles). The ratio of [capacity after 200 cycles] to [initial capacity] is designated as the retention of capacity. The results are shown in Table 1.

**Table 1**

| Battery | Specific surface area (m²/g) | Initial capacity (mAH) | Retention of capacity (%) |
|---|---|---|---|
| (H) | 0.005 | 372 | 97.5 |
| A | 0.01 | 396 | 97.2 |
| B | 0.1 | 402 | 97.0 |
| (C) | 0.5 | 401 | 95.4 |
| (D) | 1.0 | 403 | 93.9 |
| (E) | 2.0 | 402 | 92.5 |
| (F) | 3.0 | 401 | 92.0 |
| (G) | 5.0 | 398 | 91.8 |

(C), (D), (E), (F), (H) and (G) are comparative examples.

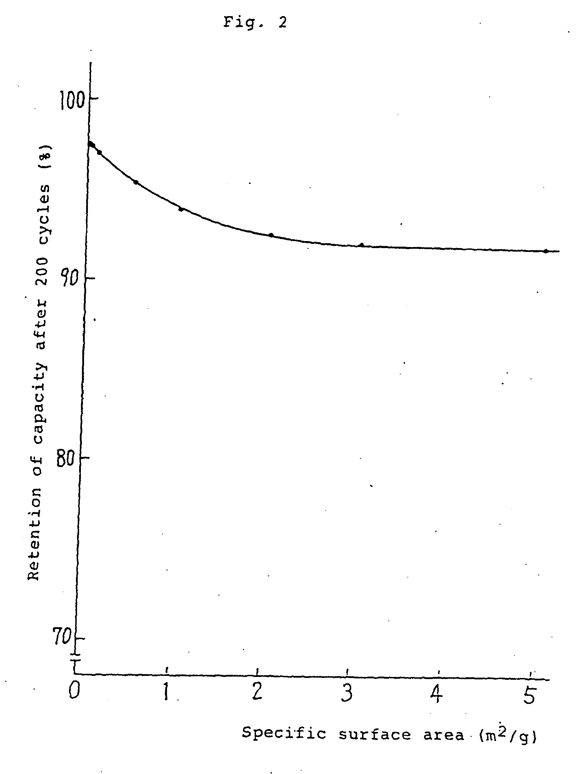

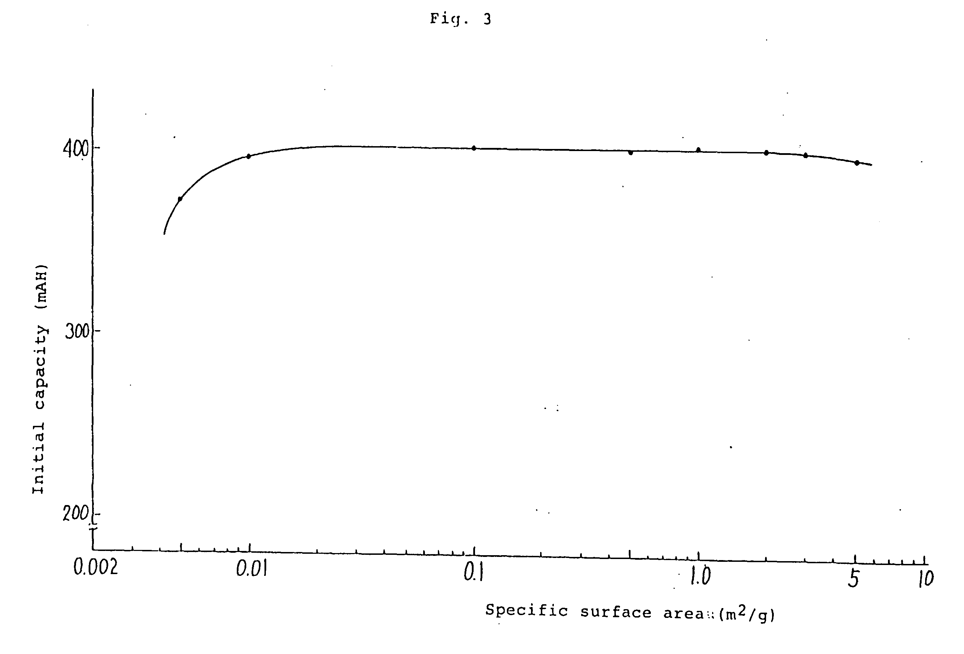

Fig. 2 shows the relationship between the specific surface area of LiCoO₂ (as the positive electrode active material) and the retention of capacity in batteries A to H. Fig. 3 shows the relationship between the specific surface area of LiCoO₂ and the initial capacity in batteries A to H. Incidentally, the abscissa for specific surface area in Fig. 3 is in log scale.

It is noted from Fig. 3 that the initial capacity increases rather sharply as the specific surface area of LiCoO₂ increases to about 0.01 m²/g but it almost levels off beyond 0.01 m²/g. Presumably, the reason for this is that the positive electrode active material with a small specific surface area (0.005 m²/g) has such a large particle diameter that the tonic mobility of the active material decreases and the utilization factor of the active material becomes poor. It is noted from Figs. 2 and 3 that the specific surface area of LiCoO₂ should be 0.01-0.1 m²/g.

The foregoing demonstrates that the batteries A and B in the working example are superior in the initial capacity and the retention of capacity to the batteries H and G in the comparative example. Presumably, the reason for this is that the LiCoO₂ powder has a specific surface area of 0.01-0.1 m²/g so that it provides an adequate area for reaction with the electrolyte.

In the present invention, a special emphasis is placed on the specific surface area to specify the positive electrode active material rather than the average particle diameter and particle size distribution, because although the first parameter is related with the second and third parameters to some extent, the correlation varies depending on the shape of particles and the structure of particles (single particles or aggregates). In other words, particles are not necessarily the same in specific surface area even though they are the same in average particle diameter and particle size distribution. Particles with surface irregularities will have a larger specific surface area even though they are the same in average particle diameter and particle size distribution. Also, single particles may have a smaller specific surface area than aggregates of single particles. It is considered that the specific surface area is closely associated with the battery reaction which is the oxidation-reduction reaction induced by the movement of electrons and ions across the surface of the active material. This is the reason why the present inventors used the specific surface area instead of the average particle diameter and particle size distribution as the parameter which is directly concerned with the characteristic properties of the battery.

Although the above-mentioned example demonstrated a nonaqueous electrolyte secondary battery in cylindrical form which has a spirally wound electrode assembly, the present invention is not limited to it and the battery may take a shape of quadratic prism, button, or coin.

The present invention provides a method for assembling a nonaqueous electrolyte secondary battery according to claim 1. This secondary battery has not only the known characteristic properties (high energy density, low self-discharge, and light weight) but also a large capacity and a high retention of capacity after repeated charging and discharging.

## Claims

1. Method for assembling a non-aqueous electrolyte secondary battery comprising:
- a positive electrode containing lithium compound oxide powder LixCoO2 (where x is between 0,05 and 1,10) as positive electrode active material,
- a nonaqueous electrolyte and
- a negative electrode containing carbonaceous material being doped and undoped with lithium upon charge and discharge,
wherein a lithium compound oxide powder is provided and the specific surface area of lithium compound oxide powder is measured by the BET-method and a lithium compound oxide powder is used that has a BET specific surface area of 0,01 to 0.1 m2/g and the non-aqueous electrolyte secondary battery is assembled using said lithium compound oxide powder as positive electrode material.

## Patentansprüche

1. Verfahren zur Herstellung einer Sekundärbatterie mit nicht-wässerigem Elektrolyten, umfassend:
- eine positive Elektrode, die ein Lithiummischoxidpulver LixCoO₂ (worin x zwischen 0,05 und 1,10 ist) als aktives Material der positiven Elektrode enthält,
- einen nicht-wässerigen Elektrolyten und
- eine negative Elektrode, welche ein kohlenstoffhaltiges Material enthält, das beim Laden und Entladen mit Lithium dotiert und entdotiert wird,
wobei das Lithiummischoxidpulver bereitgestellt wird, und die spezifische Oberfläche des Lithiummischoxidpulvers durch das BET-Verfahren gemessen wird, und ein Lithiummischoxidpulver verwendet wird, das eine spezifische Oberfläche nach BET von 0,01 bis 0,1 m²/g aufweist, und die Sekundärbatterie mit nicht-wässerigem Elektrolyten unter Verwendung des Lithiummischoxidpulvers als positivem Elektrodenmaterial hergestellt wird.

## Revendications

1. Procédé d'assemblage d'un accumulateur électrique à électrolyte non aqueux comprenant :
- une électrode positive contenant une poudre d'un oxyde composite de lithium LixCoO₂ (x étant compris entre 0,05 et 1,10) comme matière active d'électrode positive,
- un électrolyte non aqueux et
- une électrode négative contenant une matière carbonée dopée ou non par du lithium lors de la charge et de la décharge,
où il est fourni une poudre d'oxyde composite du lithium et la surface spécifique de la poudre d'oxyde composite du lithium est mesurée par le procédé BET et on utilise une poudre d'oxyde composite de lithium qui a une surface spécifique BET de 0,01 à 0,1 m²/g et on assemble l'accumulateur électrique à électrolyte non aqueux en utilisant ladite poudre d'oxyde composite du lithium comme matière d'électrode positive.
